# EUROPEAN PATENT APPLICATION

(11) **EP 4 401 014 A1**
(43) Date of publication of application: **17.07.2024**
(21) Application number: 22864761.6
(22) Date of filing: 05.09.2022
(51) Int. Cl.: G06N 20/00, B25J 13/00

(54) **METHOD FOR CONSTRUCTING TRAINED MODEL**

(30) Priority: 06.09.2021 JP 2021145070
(71) Applicant: KAWASAKI JUKOGYO KABUSHIKI KAISHA, Kobe-shi, Hyogo 650-8670 (JP)
(72) Inventor: HASUNUMA, Hitoshi, Kobe-shi, Hyogo, 6508670 (JP); YAMAMOTO, Takeshi, Kobe-shi, Hyogo, 6508670 (JP); KURASHIMA, Kazuki, Kobe-shi, Hyogo, 6508670 (JP); KISHIDA, Ayumi, Kobe-shi, Hyogo, 6508670 (JP); KAMON, Masayuki, Kobe-shi, Hyogo, 6508670 (JP)
(74) Representative: Müller-Boré & Partner Patentanwälte PartG mbB
(86) International application number: PCT/JP2022/033334
(87) International publication number: WO 2023/033179

(57) **Abstract**

A construction method of a trained model includes six processes. In a first process, data for performing machine learning of an operation of a controlled machine by a human is collected. In a second process, collected data that is the data collected is evaluated and, when it does not satisfy a predetermined evaluation criterion, the data is collected again. In a third process, training data is selected from the collected data that satisfies the evaluation criterion. In a fourth process, the training data is evaluated and, when it does not satisfy a predetermined evaluation criterion, the training data is selected again. In a fifth process, a trained model is constructed by machine learning using the training data that satisfies the evaluation criterion. In a sixth process, the trained model is evaluated and, when it does not satisfy a predetermined evaluation criterion, the trained model is trained again.

## Description

### TECHNICAL FIELD

The present disclosure relates to construction of a trained model by machine learning.

### BACKGROUND ART

Conventionally, there has been a known system for controlling a motion of a robot or the like using machine learning that learns things iteratively from collected data to automatically find laws and rules and achieves a function similar to a natural learning ability of a human. PTL 1 discloses a system of this type.

In a motion prediction system of PTL 1, a motion prediction model is constructed by performing machine learning of data obtained when an operator manually and remotely controls a robot arm to perform a task. Based on output of the motion prediction model, the robot arm is automatically operated.

### PRIOR-ART DOCUMENTS

### PATENT DOCUMENTS

PTL 1: Japanese Patent Application Publication 2018-206286

### SUMMARY OF THE INVENTION

### PROBLEMS TO BE SOLVED BY THE INVENTION

For example, it may be necessary to evaluate the performance of the motion prediction model (a trained model) constructed as in PTL 1. However, various aspects, such as the quality of the remote operation performed by a user during learning, the quality of the obtained training data, the quality of the constructed trained model, and the quality of the autonomous operation based on the output of the trained model, are compositely reflected in the quality of the autonomous motion of the robot arm. In addition, these qualities often have influences on each other. Therefore, it was difficult to evaluate each quality one by one. As a result, even if the need to improve the trained model arose, it was unclear what to improve and inefficient trial and error was required.

The present disclosure is made in view of the situation described above, and its purpose is to obtain a high-performance trained model efficiently.

### MEANS FOR SOLVING THE PROBLEMS

The problem to be solved by the present disclosure is as described above. The means to solve this problem and the effects thereof will be described below.

An aspect of the present disclosure provides a construction method of a trained model as follows. That is, the construction method of the trained model includes a first process, a second process, a third process, a fourth process, a fifth process, and a sixth process. In the first process, data for performing machine learning of an operation of a controlled machine by a human is collected. In the second process, collected data that is the data collected is evaluated and, when it does not satisfy a predetermined evaluation criterion, the data is collected again. In the third process, training data is selected from the collected data that satisfies the evaluation criterion. In the fourth process, the training data is evaluated and, when it does not satisfy a predetermined evaluation criterion, the training data is selected again. In the fifth process, a trained model is constructed by machine learning using the training data that satisfies the evaluation criterion. In the sixth process, the trained model is evaluated and, when it does not satisfy a predetermined evaluation criterion, the trained model is trained again.

In this manner, by proceeding with the construction of the trained model step by step and conducting the evaluation at each step, a cause of any problems found at each process can be easily narrowed down. Thus, the trained model can be constructed smoothly.

### EFFECTS OF THE INVENTION

According to the present disclosure, a high-performance trained model can be efficiently obtained.

### BRIEF DESCRIPTION OF THE DRAWINGS

FIG. 1 is a block diagram showing a configuration of a robot operation system according to one embodiment of the present disclosure.
FIG. 2 is a conceptual diagram illustrating operation information.
FIG. 3 is a diagram showing an example of a series of tasks to be performed by a robot and each of task states.
FIG. 4 is a diagram showing an example of information presented to a user during selection of training data.
FIG. 5 is a diagram showing an example of selection of training data from collected data.
FIG. 6 is a diagram showing an example of display when performing an operation to delete some of motions of a robot that is based on an output from a trained model.
FIG. 7 is a diagram showing an example of display when a motion of a robot based on an output from a learning model stagnates during an operation.
FIG. 8 is a diagram showing an example of display when training data is added to resolve stagnation of a motion of a robot.
FIG. 9 is a schematic diagram illustrating verification of a training element for a trained model.
FIG. 10 is a flowchart showing a workflow from constructing a trained model to making a robot operate.

### EMBODIMENT FOR CARRYING OUT THE INVENTION

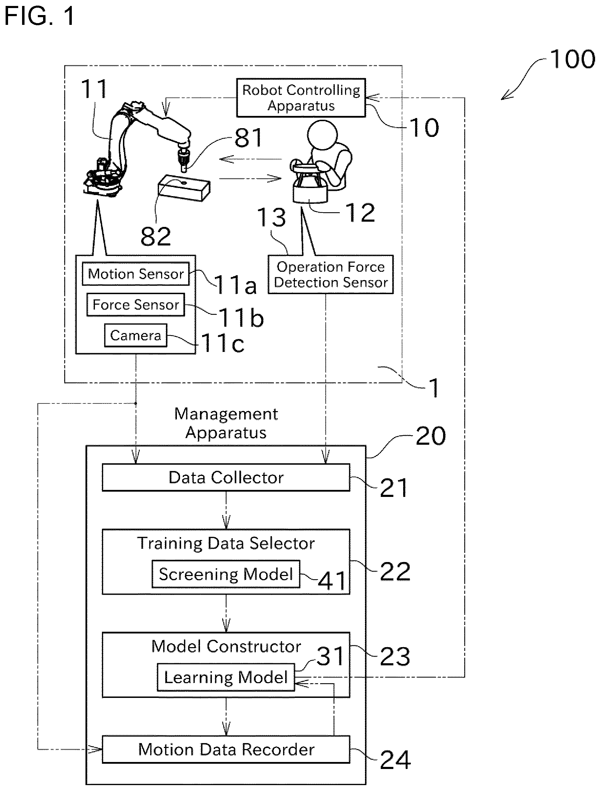

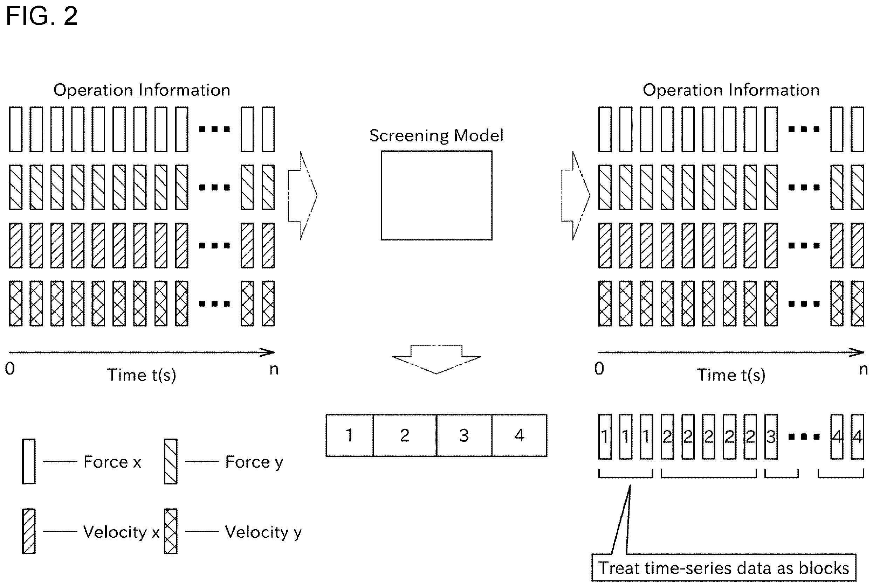

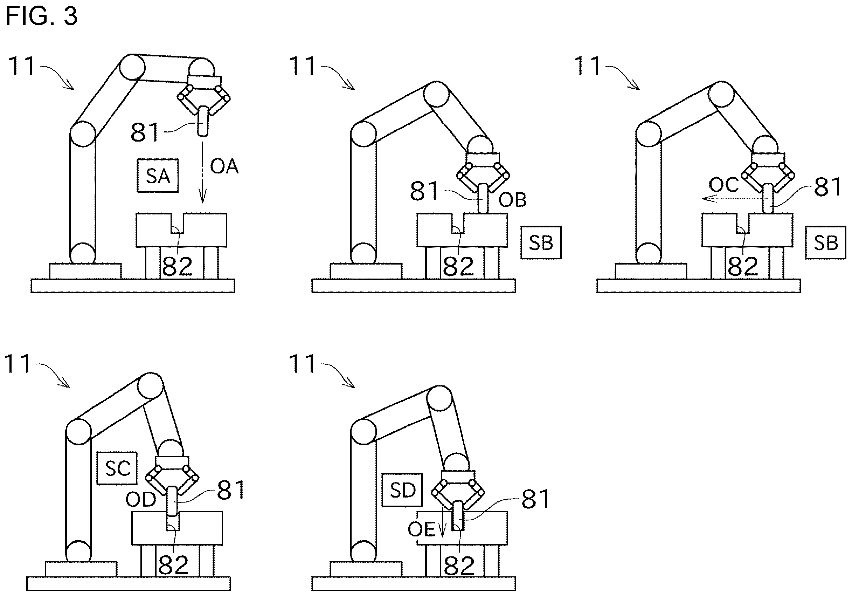

The disclosed embodiments will be described below with reference to the drawings. First, with reference to FIG. 1 and other drawings, a robot operation system 100 that uses a learning model constructed by a method according to the present embodiment will be briefly described. FIG. 1 is a schematic diagram illustrating the robot operation system 100. FIG. 2 is a conceptual diagram illustrating operation information. FIG. 3 is a diagram showing an example of a series of tasks to be performed by a robot 11 and each of task states.

The robot operation system 100 is a system that constructs a learning model 31 and operates a robot system 1 based on output of the learning model 31. As a result of the robot system 1 operating with the learning model 31, the robot 11 performs a task autonomously.

The task performed by the robot 11 may be determined as desired. For example, it may be welding, assembly, machining, handling, painting, cleaning, or polishing.

As shown in FIG. 1, the robot system 1 includes a robot controlling apparatus 10, the robot (controlled machine) 11, and an operating apparatus 12. The apparatuses are connected to each other via a wired or wireless network and can exchange signals (data).

The robot controlling apparatus 10 is comprised of a known computer. The robot controlling apparatus 10 includes a processing unit, such as a microcontroller, a CPU, a MPU, a PLC, a DSP, an ASIC or a FPGA, a robot memory unit, such as a ROM, a RAM or a HDD, and a communication unit that can communicate with an external apparatus. The robot memory unit stores, for example, a control application for controlling an arm or other parts.

The robot controlling apparatus 10 can switch an operation mode of the robot 11 between a manual operation mode and an autonomous operation mode.

In the manual operation mode, a user operates the operating apparatus 12 as described below to make the robot 11 operate.

In the autonomous operation mode, the robot 11 autonomously operates based on the results of machine learning on the motion of the robot 11 operated manually.

The robot 11 is configured, for example, as a vertical articulated robot with 6 degrees of freedom. The robot 11 includes an arm attached to a base. The arm includes more than one joint. An actuator (for example, an electric motor) not shown in the drawings for driving the arm around each of the joints is arranged at each joint. An end effector is attached to a distal end of the arm in accordance with the task to be performed.

The arm and the end effector of the robot 11 operate based on a motion command for operating the robot 11. This motion command includes, for example, a command for a linear velocity or a command for an angular velocity.

A sensor for detecting the motion of the robot 11 and the surrounding environment of the robot 11 is attached to the robot 11. In the present embodiment, a motion sensor 11a, a force sensor 11b, and a camera 11c are attached to the robot 11.

The motion sensor 11a is comprised of, for example, an encoder. The motion sensor 11a is arranged at each joint of the arm of the robot 11 and detects a rotational angle or an angular velocity of each joint.

The force sensor 11b detects a force applied to each joint of the arm of the robot 11 or to the end effector attached to the distal end of the arm when the robot 11 is in motion. The force sensor 11b may be configured to detect moment instead of or in addition to the force.

The camera 11c detects an image of a workpiece 81 to be worked on (a progress of the task to be performed on the workpiece 81). In order to detect the progress of the task, a sound sensor that detects a sound and/or a vibration sensor that detects a vibration may be arranged instead of or in addition to the camera 11c. Furthermore, a sensor that collects information about a distance, such as a laser scanning sensor or an infrared sensor, may be arranged at the robot 11 or other member.

The data the motion sensor 11a detects is motion data that indicates the motion of the robot 11 and the data the force sensor 11b and the camera 11c detect is surrounding environment data that indicates the state of the environment of the surrounding of the robot 11. The surrounding environment data is so-called state values that indicate the state of the progress of the task performed by the robot 11 at a time when the sensor detects the data. The data detected by the motion sensor 1 1a, by the force sensor 11b, and by the camera 11c is collected by a management apparatus 20, which is described below, as state information.

The operating apparatus 12 is a member that a user operates to make the robot 11 operate. The operating apparatus 12 varies depending on the task to be performed. It may be, for example, a lever that the user operates with their hand or a pedal that the user operates with their foot. The operating apparatus 12 is configured as, for example, a tele-operating apparatus arranged at a place physically separated from the robot 11.

The operating apparatus 12 includes an operation force detection sensor 13. The operation force detection sensor 13 detects a user operation force, which is a force that the user applied to the operating apparatus 12. If the operating apparatus 12 is configured in such a way that it can be moved in various directions, the user operation force may be a value that includes the direction and magnitude of the force, such as a vector. An acceleration linked to a force (that is, a value obtained by diving the force the user applied by the mass of the operating apparatus 12) may be detected as the user operation force, as well as the force the user applied.

In the present embodiment, the user operation force detected by the operation force detection sensor 13 includes, for example, as shown in FIG. 2, components of the force and the velocity of the robot 11 in the x-axis (force x and velocity x) and components of the force and the velocity of the robot 11 in the y-axis (force y and velocity y). The data related to the user operation force that is detected by the operation force detection sensor 13 is collected by the management apparatus 20 as operation information.

As shown in FIG. 1, the robot operation system 100 includes the learning model 31. In the robot operation system 100, for example, the learning model 31 used to make the robot 11 perform a series of tasks to insert the workpiece 81 into a recess 82 of a member can be constructed by machine learning.

Specifically, the user operates the operating apparatus 12 to make the robot 11 to operate as follows. That is, in operation OA shown in FIG. 3, while holding the workpiece, the robot 11 positions the workpiece 81 above the member and brings the workpiece 81 close to the face of the member. In operation OB, the robot 11 continues moving the workpiece 81 and brings the workpiece 81 into contact with the face of the member. In operation OC, the robot 11 moves the workpiece 81 toward the location of the recess 82. While the workpiece 81 is being moved, it is kept in contact with the face of the member. In operation OD, the robot 11 bring an end of the workpiece 81 into contact with the inner wall of the recess 82. In operation OE, the robot 11 inserts the workpiece 81 into the recess 82.

The user operates the robot 11 so that the robot 11 operates in the order of operation OA to operation OE as described above. By learning the relationship between the state information and the user operation force during these processes, the robot operation system 100 can construct the learning model 31 capable of making the robot 11 perform the autonomous operation in the order of operation OA to operation OE.

As shown in FIG. 1, the robot operation system 100 of the present embodiment includes the management apparatus 20 in addition to the robot system 1.

The management apparatus 20 is comprised of, for example, a known computer and includes a processing unit, such as a microcontroller, a CPU, a MPU, a PLC, a DSP, an ASIC or a FPGA, a robot memory unit, such as a ROM, a RAM or a HDD, and a communication unit that can communicate with an external apparatus.

The robot system 1 and the management apparatus 20 are connected to each other via a wired or wireless network and can exchange signals (data). The management apparatus 20 may be comprised of physically the same hardware as the robot controlling apparatus 10 included in the robot system 1.

The management apparatus 20 includes a data collector 21, a training data selector 22, a model constructor 23, and a motion data recorder 24.

The data collector 21 collects data from the robot system 1. As described above, the data collected from the robot system 1 by the data collector 21 includes the state information that indicates the surrounding environment data of the robot 11 and the operation information that reflects the user operation force corresponding to the surrounding environment data of the robot 11. The data collected by the data collector 21 may be referred to as collected data in the following description.

The collected data is time-series data of a series of the state information and the operation information obtained when the user continuously operates the operating apparatus 12 to make the robot 11 perform a certain task (or a part of a task). That is, the data collector 21 collects each of the state information and each of the operation information linking them with the time. For example, one set of collected data is obtained when the user continuously operates the operating apparatus 12 to make the robot 11 perform a series of tasks including the five operations, operation OA to OE as explained with FIG. 3, once. The state information and the operation information include a measurement value based on a detected value obtained using the camera 11c and the operation force detection sensor 13 or the like.

The data collector 21 includes an evaluation function to determine whether the collected data satisfies a predetermined evaluation criterion.

Conditions that the collected data is required to satisfy are determined as desired taking the feature of the learning model 31, the content of preprocessing performed on the collected data, or the like. In the present embodiment, that the time length of the collected data is at least a predetermined value and that data indicating a predetermined operation appears at the beginning and the end of the time series are determined as conditions that the collected data should satisfy.

The data collector 21 evaluates the length of the collected data or the like following the predetermined above-mentioned evaluation criterion. This evaluation is not a complicated one using machine learning, for example, but it is conducted in a so-called rule-based manner. Accordingly, the process can be simplified and the real-time performance of the evaluation can be enhanced.

The data collector 21 may calculate a value that indicates the degree of how the collected data is suitable to be used as the training data and present the results of the calculation to the user as the effectiveness of the collected data. The calculation of the effectiveness may be performed as follows, for example. That is, a score is defined in advance for each of the conditions that the collected data should satisfy. The data collector 21 determines whether the collected data satisfies each of the conditions and calculates a total value of the scores corresponding to the conditions satisfied as the effectiveness. Whether the collected data satisfies the evaluation criterion may be determined based on the results of the calculation of the effectiveness.

The presentation of the effectiveness to the user may be achieved, for example, by displaying the value of the effectiveness on an output apparatus that is included in the management apparatus 20 and is not shown in the drawings, such as a display. Instead of displaying the value on the display, the effectiveness may be expressed, for example, by a color of the displayed graphic.

If the collected data does not satisfy the required conditions or the above-mentioned value of the effectiveness is not suitable, the data collector 21 can present what should be done to improve the data to the user. The presentation of an improvement method may be achieved by displaying a message on the above-mentioned display. The content of the message may be determined as desired. For example, it may be a text message, such as "the time for operating the apparatus is too short". The means for presentation of the improvement method is not limited to the text message. It may be achieved, for example, by outputting an icon, a sound, or a video.

By repeating the operation while referring to those suggestions for the improvement, the user can easily master the operation of the operating apparatus 12 even if they are inexperienced at first and can operate the operating apparatus 12 in such a way that the collected data suitable to be used as the training data can be obtained.

If the collected data satisfies the predetermined evaluation criterion, the data collector 21 outputs the collected data to the training data selector 22.

The training data selector 22 screens the collected data input from the data collector 21 to obtain the training data.

The management apparatus 20 includes an input apparatus not shown in the drawings. The input apparatus may be comprised of, for example, a key, a computer mouse, and a touch panel.

The user instructs by the input apparatus whether the collected data collected by the data collector 21 at a time when they previously operated operating apparatus 12 should be used as the training data for machine learning. In this manner, a selected portion of the collected data is adopted as the training data.

In the present embodiment, the selection of the training data from the collected data is determined by the input by the user. Accordingly, the collected data used as the training data can be limited according to the intention of the user. However, the training data selector 22 may automatically screen the collected data.

For example, the collected data may be automatically screened as follows. The training data selector 22 includes a machine learning model constructed by machine learning in order to evaluate the collected data. This machine learning model is constructed separately from the learning model 31 and in advance of the construction of the learning model 31. The machine learning model constructed in the training data selector 22 may be referred to as a screening model 41.

The screening model 41 learns the collected data collected by the data collector 21. In a training phase of the screening model 41, the collected data is classified into more than one group using an appropriate clustering method. If the collected data includes more than one task state, the collected data is divided for each task state and then classified. The task state will be described in detail below.

Clustering is a method of automatically obtaining more than one cluster, which is a group of data with similar features by learning a law of distribution from a large amount of data. Clustering can be performed using a known clustering method, for example, a NN method, a K-means method, or a self-organizing map. The number of clusters into which the task states included in the collected data are classified can be determined as desired. The classification may be performed using another automatic classification method other than clustering.

The detail of the task state will be described below. In the present embodiment, for example, the collected data related to the series of tasks collected by the data collector 21 is classified for each operation performed by the user (a reference operation) that corresponds to the task state. For example, as shown in FIG. 3, when the robot 11 is made perform a series of tasks of inserting the workpiece 81 into the recess 82, the tasks can be classified into four task states: aerial, contact, insertion, and completion.

The task state SA (aerial) is a state where the robot 11 is holding the workpiece 81 above the recess 82. The task state SB (contact) is a state where the workpiece 81 held by the robot 11 is in contact with a face on which the recess 82 is formed. The task state SC (insertion) is a state where the robot 11 is inserting the workpiece 81 into the recess 82 while holding the workpiece 81. The task state SD (completion) is a state where the workpiece 81 held by the robot 11 is completely inserted into the recess 82.

As described above, the four task states are the series of the tasks performed by the robot 11 classified by process. When the task by the robot 11 progresses correctly, the task state transitions in the following order: the task state SA (aerial), the task state SB (contact), the task state SC (insertion), and the task state SD (completion).

The data learned by the screening model 41 may be, for example, a combination of any one of the task states, the next task state linked to that task state (that is, the task state into which that task state transitions next), and at least one pair of the state information and the user operation force linked to this state information. Accordingly, the screening model 41 can learn the order of the task states and the order of the corresponding operation forces. The machine learning of the screening model 41 can be referred to as clustering of the data.

The above-mentioned task states SA, SB, SC, and SD are disclosed as typical examples and there can be many other different task states. Suppose, for example, that the operator perform an operation to make the robot 11 perform the same task for several times and a task state SA1 that corresponds to one pair of the state information and the operation force, a task state SA2 that corresponds to another pair of the sate information and the operation force, and a task state SA3 that corresponds to another pair of the sate information and the operation force are collected. Strictly speaking, because of variations in the operator's operations, variations in situations, or the like, these task states SA1, SA2, and SA3 are different from each other. However, since the task states SA1, SA2, and SA3 have common characteristics, they are to be classified into the same cluster (a cluster for the task state SA).

The screening model 41 performs machine learning in such a way as described above that the time order of the outputs of the operation forces is reflected. Briefly speaking, the screening model 41 learns at least one pair of the state information and the operation force that corresponds to each of the task state SA, the task state SB, the task state SC, and the task state SD and learns the order of the tasks such as that the task state SB is next to the task state SA. Accordingly, the classification that reflects the time-series information of the operation forces can be performed using the screening model 41. That is, each of the operation forces linked to each of the task states can be reflected following the order of the tasks.

The state information is the sensor information (for example, a task state, such as a position, a velocity, a force, moment, an image) detected by the motion sensor 11a, the force sensor 11b and the camera 11c as described above. This state information may include information calculated based on the sensor information (for example, a value that indicates changes in the sensor information over time from the past to the present).

The screening model 41, which has completed a training phase, can infer and output the reference operation that corresponds to the state information that is linked to the time-series information of the collected data input, in an inference phase. Instead of the inferred reference operation, the screening model 41 may output, for example, the information of the cluster that the reference operation belongs to. In this case, the screening model 41 can output the similarity between the operation information of the collected data input and the inferred reference operation. The similarity can be defined, for example, using the known Euclidean distance. The similarity output by the screening model 41 can be used as the evaluation value for evaluating the collected data.

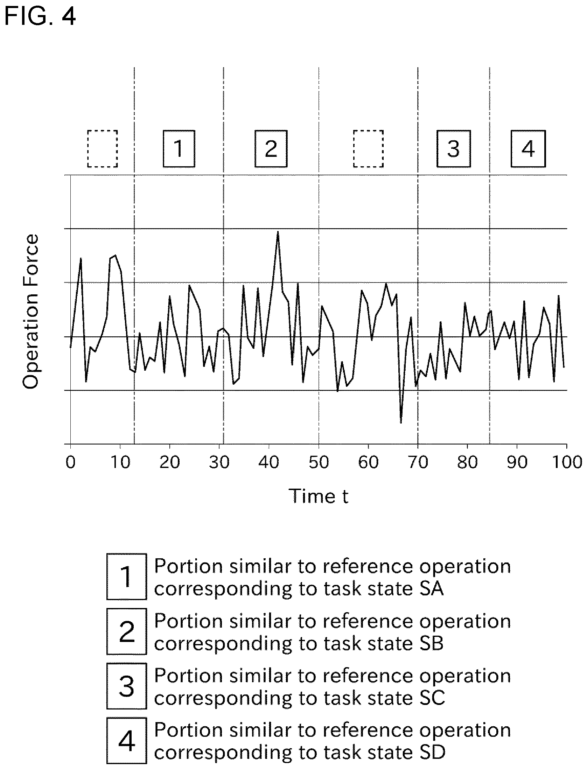

As described with FIG. 3, in the series of tasks performed by the robot 11 indicated by one collected data, the task state transitions sequentially. In consideration of this, as shown in FIG. 4, the output of the similarity by the screening model 41 is performed with respect to the operation information in each range of a predetermined time. Specifically, when the evaluation value output by the screening model 41 with respect to the collected data in the predetermined time range exceeds a predetermined threshold, the training data selector 22 assigns a label (correspondence information) output by the screening model 41 that indicates the cluster that the reference operation belongs to to the collected data in that time range. On the other hand, when the evaluation value output by the screening model 41 is below the predetermined threshold, the training data selector 22 does not assign a label to that time range.

In FIG. 4, an example is shown where a label, numerical value "1", is assigned to the operation information because the operation information of the collected data in the predetermined time range is similar to the reference operation that corresponds to the task state SA. Similarly, the operation information in the time ranges labeled with the numerical value "2", "3", and "4" in FIG. 4 are similar to the reference operations that correspond to the task state SB, SC, and SD, respectively. FIG. 4 also shows time ranges that no labels were assigned to.

The collected data in the time range that no labels were assigned to may be inappropriate to be used as the training data since the situation differs significantly from any of the task states that the screening model 41 learned. Therefore, the training data selector 22 does not adopt this time range as the training data. On the other hand, the training data selector 22 adopts the collected data in the time range assigned with the label as the training data.

The label that the screening model 41 outputs needs not to be used for the automatic determination on whether the collected data should be adopted as the training data. For example, the label may be presented as reference information when the user manually determines whether the collected data should be adopted as the training data. FIG. 4 shows an example of a screen presented to the user. In this example, the operation information included in the collected data (for example, the operation force) is visually displayed in the form of a graph and the portion of data that includes the consecutive time-series information and is assigned with the same numerical label is displayed as one block. Accordingly, the user can determine whether the collected data should be adopted as the training data more easily.

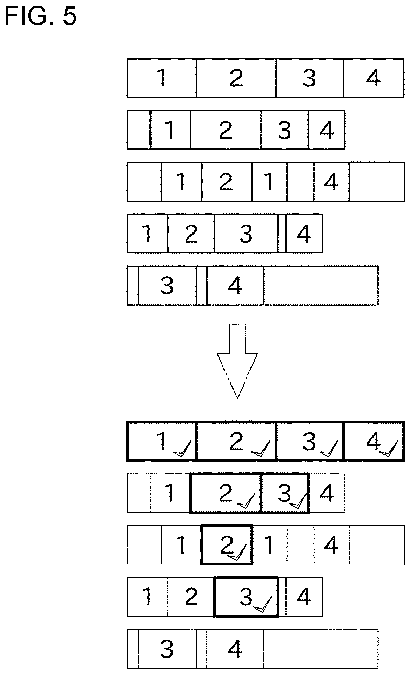

In this example, clustering is adopted in the screening model 41. Therefore, it is easier to take out only the data in a certain time range (a block) with a valid operation from the collected data obtained when the user performs a series of the operations and adopt it as the training data. FIG. 5 shows an example of data to be adopted as the training data. In the example shown by FIG. 5, all blocks in one of five pieces of the collected data are adopted as the training data while only some of the labeled blocks in other three pieces are adopted as the training data.

The training data selector 22 includes a function of conducting evaluation on the selected training data. The criterion for the evaluation may be determined as desired. For example, whether the amount of the training data is sufficient, whether the amount of training data corresponding to some task states is sufficient, or the like is evaluated.

If the training data satisfies the evaluation criterion, the training data selector 22 outputs the training data to the model constructor 23.

The model constructor 23 utilizes machine learning (for example, supervised learning) to construct the learning model 31 used within the robot system 1. In the following description, the learning model that has completed learning may be referred to as a trained model.

The model constructor 23 uses the training data output from the training data selector 22 in order to construct to the learning model 31. The training data corresponds to the data selected from the collected data as described above. Therefore, similar to the collected data, the training data includes at least the surrounding environment data that reflects the task state of the robot 11 (that is, the state information) and the user operation force linked to this surrounding environment data (that is, the operation information).

The learning model 31 is a neural network with a general configuration that includes, for example, an input layer, a hidden layer, and an output layer. Each layer includes more than one unit that simulate brain cells. The hidden layer is arranged between the input layer and the output layer and comprised of a suitable number of intermediate units. The state information (the training data) input into the learning model 31 by the model constructor 23 flows in the order of the input layer, the hidden layer, and the output layer. The number of the hidden layer is determined as appropriate. The format of the learning model 31 is not limited to this and it may be determined as desired.

In this learning model 31, the data input to the input layer is the state information that reflects the above-mentioned surrounding environment data. The data output by the output layer is a result of the inference of the detected value obtained by the operation force detection sensor 13. Substantially, this indicates the inferred user operation force. Therefore, the data output by the output layer represents the operation by the user inferred by the learning model 31.

Each input unit is connected to each intermediate unit by a path through which the information flows and each intermediate unit is connected to each output unit by a path through which the information flows. In each path, an influence of the information in the upstream unit on the information in the downstream unit (a weight) is set.

In a training phase of the learning model 31, the model constructor 23 inputs the state information to the learning model 31 and compares the operation force output from the learning model 31 and the operation force of the user. The model constructor 23 updates the learning model 31 by updating above-mentioned weight by the backward propagation of errors method, which is a publicly known algorithm, for example, so that an error between obtained by this comparison becomes small.

Since the learning model 31 is not limited to the neural network, the method for updating the learning model 31 is also not limited to the backward propagation of errors method. For example, the learning model 31 may be updated by SOM (Self-organizing maps), which is a publicly known algorithm. Learning is achieved by continuously performing such processes.

The model constructor 23 includes a function of evaluating the learning model 31 constructed. The criterion for this evaluation may be determined as desired. For example, when specific state information is input to the learning model 31, whether the user operation force as assumed is output is evaluated. Time and electric power required to perform the task may be evaluated by performing simulation using a 3D model of the robot 11 or the like.

With respect to the evaluation on the learning model 31, when the model constructor 23 operates the learning model 31 in the inference phase, it may be configured to also present the training data that is the basis for the inference that the leaning model 31 outputs. Accordingly, the leaning model 31 can be easily evaluated by a human or the like.

For example, consider a case where the learning model 31 is not constructed with a neural network but constructed by clustering similarly to the above-mentioned screening model 41. In the training phase, each training data is plotted as a point in a multidimensional feature space. Each training data is assigned with an identifier that can uniquely identify the training data.

Once all the training data is plotted, more than one cluster is obtained by the suitable clustering method as described above, similarly as the screening model 41. Next, the model constructor 23 calculates data that represent each cluster. In the following description, this data may be referred to as nodes. For example, data that correspond to the center of gravity of each cluster in the multidimensional space may be defined as the nodes. When the nodes for all clusters are obtained, the training phase ends.

In the inference phase of the learning model 31, the state information at a certain time is input to the learning model 31. The learning model 31 obtains one or more nodes that include a feature similar to the state information. The similarity can be defined, for example, using the Euclidean distance.

When a node with a feature similar to the state information is obtained, the learning model 31 finds the user operation force included in the data of the node (in other words, the detected value obtained by the operation force detection sensor 13). If more than one node similar to the state information is detected, the user operation forces of multiple nodes are suitably composed. The learning model 31 outputs the obtained user operation force as the above-mentioned inferred operation force. At this time, the learning model 31 outputs the identifier that identifies the training data that corresponds to the node. Accordingly, the training data that is the basis for the inference by the learning model 31 can be identified.

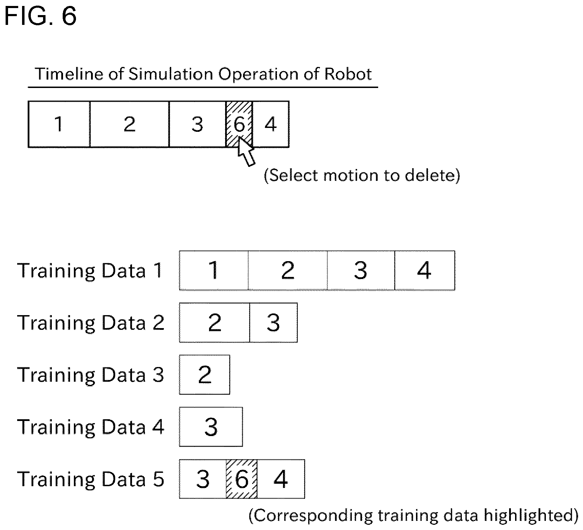

For example, consider a case where some of the motions of the robot 11 based on the learning model 31 turn to be inappropriate in the above-mentioned simulation and the user does not want to let the robot 11 perform that motion. FIG. 6 shows an example of a simulation screen on the display of the management apparatus 20. The simulation screen displays a timeline and the labels correspond to the above-mentioned task states that classify the series of the motions performed by the robot 11 in the simulation are displayed along the time axis side by side. The user operates a suitable input apparatus to select a time range (in other words, the task state) that corresponds to the motion that they wants to delete, using the above-mentioned block as a unit. Then, the portion of the training data that corresponds to the task state (block) that corresponds to the motion to be deleted becomes highlighted on the display. The method of highlighting is determined as desired. With the above configurations, the user can intuitively grasp the magnitude of the effect of the deletion and decide whether or not to delete the motion.

When the user commands the deletion of the motion, the plot of the training data corresponds to a portion of to be deleted is deleted from the results of clustering that corresponds to the results of learning of the learning model 31. When the leaning model 31 subsequently operates in the inference phase, it becomes to output an operation force based on another training data instead of the operation force caused the undesirable motion. In these manner, the results of leaning of the learning model 31 can be partially modified.

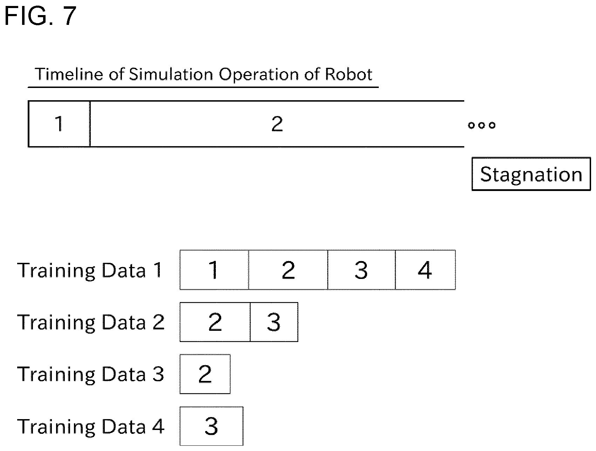

For example, consider a case where the motion of the robot 11 based on the learning model 31 stagnates during the above-mentioned simulation. To give a specific example, in the operation OD of bringing the end of the workpiece 81 into contact with the inner wall of the recess 82 in FIG. 3, if the position of the workpiece 81 does not match the position of the recess, the workpiece 81 cannot be brought into contact with the inner wall of the recess 82 so the robot 11 stops without performing the following operation. FIG. 7 shows an example of the results of simulation where the motion of the robot 11 stagnates.

Consider a case where the user wants to add one or more new training data to resolve this situation. Similar to the other training data, this training data is for performing a series of operations. However, the new training data includes an operation of slightly moving the workpiece 81 in various direction in a horizontal plane while keeping the workpiece 81 in contact with the face adjacent to the recess 82 before the operation OD in order to match the center of the workpiece 81 with the center of the recess 82.

When the user commands the addition of the new training data, the plot of the new training data is added to the results of clustering in the above-mentioned multidimensional space. This corresponds to that the learning model 31 performs additional learning.

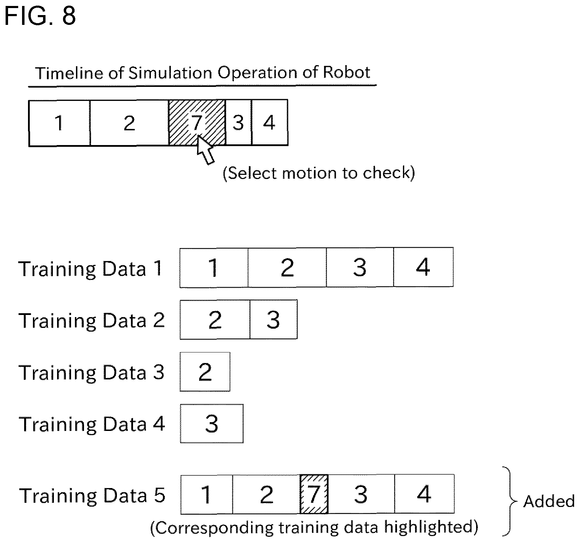

After the learning model 31 performed the additional learning, the user commands the simulation to be performed again under the same conditions as above. Assume that, in this simulation, the robot 11 performs a new motion that was not included in the previous simulation and successfully performs the series of the operations as a result. FIG. 8 shows an example of the simulation in this case. With the screen on which the results of the simulation is displayed, the user operates the input apparatus to select a portion in a timeline that corresponds to the new motion. If, in response to this selection, a corresponding portion of the newly added training data is highlighted, the user can conclude that the stagnation of the motions in the simulation is resolved by the newly added training data.

As described above, in the above-mentioned configuration, the effect of deleting or adding the content of what the learning model 31 learns is presented to the user. As a result, the user can edit what the learning model 31 learns with a sense of ease.

If the learning model 31 is determined to satisfy the evaluation criterion, the model constructor 23 outputs information indicating the satisfaction to the motion data recorder 24.

The motion data recorder 24 transmits the output from the learning model 31 to the robot system 1 to make the robot 11 perform the autonomous operation and also records the motion data. This motion data is utilized, for example, to verify the autonomous operation of the robot 11. The motion data recorder 24 may be used during a subsequent actual operation, as described in detail below.

The state information that indicates the surrounding environment data of the robot 11 is input to the motion data recorder 24. The motion data recorder 24 outputs the input state information to the learning model 31 in the model constructor 23. The learning model 31 operates in the inference phase and its output is input to the robot controlling apparatus 10. Accordingly, the robot 11 can operate autonomously.

When operating the learning model 31 in the inference phase, the motion data recorder 24 can also record whether each motion is verified or not. For this recording, a suitable memory unit included in the management apparatus 20 is used.

The detail will be described in the following description. With regard to the motion of the robot 11 or the like based on a machine learning models, it is difficult to replicate all of the behavior by a prior repeated test or the like due to the nature of machine learning. Therefore, for example, in a case where the learning model 31 is constructed by clustering as described above, the motion data recorder 24 is configured to store each plot in the multidimensional spate linked to information whether it is verified. Each plot in clustering may be adopted as a node. The node is data representative of the cluster, as described above. Each data (plot) and each node correspond to an individual training element in the learning model 31.

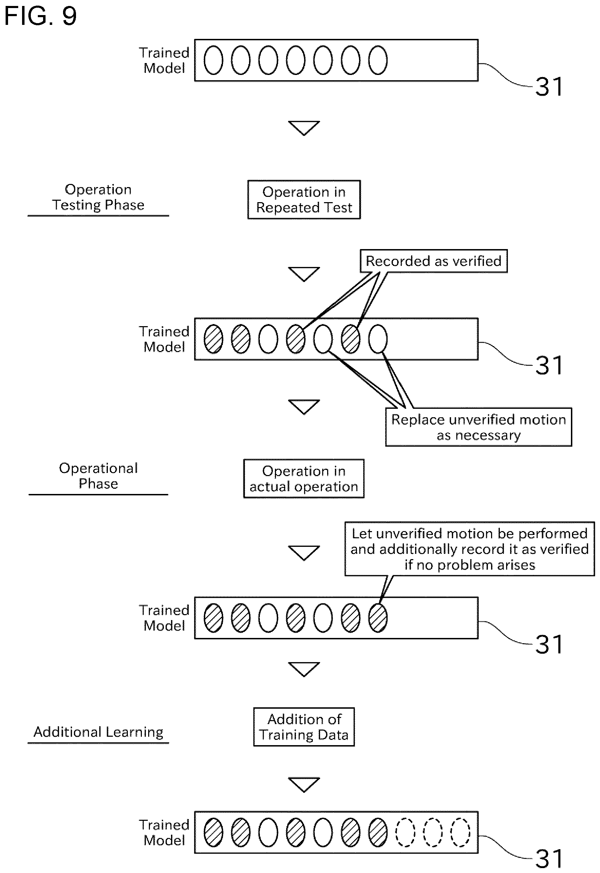

FIG. 9 schematically shows changes in the content stored in the motion data recorder 24 in relation to multiple phases that take place after the construction of the learning model 31.

First, an operation testing phase will be described. After the learning model 31 is constructed by the model constructor 23, an operation test with a certain number of trials is performed actually using the robot 11.

As described above, during the inference phase of the learning model 31, the state information at a certain point in time is input to the learning model 31. If the learning model 31 is constructed by clustering, the learning model 31 obtains a node with features similar to this state information.

The learning model 31 includes more than one node that may be the basis for outputting the operation information during the inference phase. In FIG. 9, the nodes are schematically represented by small ellipses. The memory unit of the management apparatus 20 can record whether each node has been verified or not in a table format. The record may be in a format other than a table. In the following description, a node for which it is recorded in the table that it has been verified may be referred to as a verified node and a node with no such record may be referred to as an unverified node.

When the operation information included in the data of the node is output as the result of inference, in the operation testing phase, the learning model 31 outputs information that identifies this node to the motion data recorder 24. Hereinafter, this information may be referred to as node identifying information. The node identifying information may be, for example, without limitation, an identification number of the training data that corresponds to the node.

Before the operation test is started, all nodes are unverified. The user monitors a tentative motion of the robot 11 based on the output from the learning model 31. The user determines whether there is any problem in the motion of the robot 11. For making this determination, the user can refer to the motion data recorded by the motion data recorder 24 by suitable means.

When they determined that there is no problem in the motion of the robot 11, the user gives an instruction of the completion of the verification by suitably operating an input apparatus of the management apparatus 20. This causes the motion data recorder 24 to update the above-mentioned table and record that the node that is output for the tentative motion has been verified. In FIG. 9, verified nodes are shown hatched.

As the trials for the motion test of the robot 11 are repeated, the number of the unverified nodes decreases and the percentage of the verified nodes gradually increases. However, it is practically impossible to verify all nodes in the operation testing phase, and it is inevitable to transfer to an operational phase with some unverified nodes remaining.

Next, the operational phase will be described. In the operational phase of the robot 11, the learning model 31 operates in the inference phase as in the above-mentioned operation testing phase. When the state information at a certain point in time is input to the learning model 31, the learning model 31 obtains a node with features similar to this state information.

The learning model 31 outputs the node identifying information that identifies the obtained node to the motion data recorder 24. This node identifying information is output before the operation information included in the date of this node is output to the robot 11 as the result of the inference.

Based on the node identifying information input from the leaning model 31, the motion data recorder 24 determines whether the node from which the operation information is going to be output has been verified or not by referring to the above-mentioned table.

If the identified node is a verified node, the motion data recorder 24 controls the robot 11 to operate by the output of this node from the learning model 31.

If the identified node is an unverified node, the motion data recorder 24 searches for a verified node similar to this unverified node. This search corresponds to a search for a verified node within a predetermined distance from the unverified node in the multidimensional feature space where the training data is plotted during clustering. This distance corresponds to similarity and it may be, for example, a Euclidean distance.

When a verified node with similarity greater than a predetermined value is obtained, the operation information that corresponds to the output from the verified node obtained by the search is compared with the operation information that corresponds to the output from the unverified node. This comparison can be done, for example, using the above-mentioned Euclidean distance.

If, after the comparison, it is determined that the similarity between the two outputs equals to or exceeds a predetermined value, it can be assumed that the operation of the robot 11 performed based on the output from the unverified node will not differ so much from the operation that is verified before. Therefore, the motion data recorder 24 controls the robot 11 to perform by the output from the unverified node. It is preferable that the processes of the determination on whether the node is verified or not, the search for the verified node, the comparison between the outputs, and the like are performed within a term of the control cycle of the robot 11.

The motion of the robot 11 based on the output from the unverified node is suitably monitored by the user. If the user determines that no problems have occurred, the user give an instruction of the completion of the verification to the management apparatus 20 by operating a suitable input apparatus, as in the operation testing phase. In response, the motion data recorder 24 updates the above-mentioned table and records that the relevant unverified node has been verified. As described above, in the present embodiment, the unverified node can be changed into the verified node during the operational phase in addition to the operation testing phase.

During the operational phase, the robot 11 does not have to operate based on the output from the unverified node. For example, the robot 11 may be operated by the motion data recorder 24 based on an output obtained by compositing the outputs from the unverified node and the similar verified node. The composition of the outputs can be done, for example, by calculating the mean and the median of the outputs. If the prevention of the unexpected motion is emphasized, the motion data recorder 24 can perform control so that the output from the similar verified node completely substitute for the output from the unverified node.

It is possible that no verified node similar to the unverified node is found during the above-mentioned search process. Even if the similar verified node is found, it is possible that the output from the unverified node and the output from the verified node are not similar to each other. In any of the above cases, it is preferable that the motion data recorder 24 forcibly changes the output from the learning model 31 so that it becomes the predetermined output for the stable operation of the robot 11.

For example, consider a case where the learning model 31 learns the operation of a master robot in a master-slave control that performs with zero difference between forces of the master robot and a slave robot. In this configuration, if the learning model 31 tries to output the operation information based on the unverified node and a similar verified node cannot be found, the motion data recorder 24 forcibly changes the user operation force that the learning model 31 outputs thereafter to zero and maintains it. As a result, the operational output from the master robot becomes zero, so that the slave robot operates in a direction with zero external force. Thus, the slave robot can transit to a stable state where zero external force is applied.

The motion data recorder 24 may also be configured to output an alarm when that the learning model 31 tries to output the operation information based on the unverified node is detected. The alarm can be outputted, for example, by displaying it on the display, but it can be also reported by other means, for example, by a sound. Accordingly, the user can grasp the situation early.

In addition to the information about whether the node is verified, additional information linked to each node that may be the basis for the output of the operation information from the learning model 31 in the inference phase may be stored in the memory unit of the management apparatus 20. This additional information may be, for example, the information about whether the node is a new node added by the additional learning, whether the node includes an output that makes the robot 11 operate with a force greater than a predetermined force, or whether the workpiece 81 has damaged with the node before. These information can be recorded, for example, the user suitably operating the input apparatus of the management apparatus 20.

The motion data recorder 24 presents the additional information to the user when outputting the above-mentioned alarm, for example. The presentation to the user is achieved, for example, by displaying it on the display. Accordingly, the user can obtain useful information about the unverified node and thus the user can easily make an appropriate determination regarding the operation of the learning model 31.

As described above, since there is a wide variety of the motions of the robot 11 based on the machine learning model, it is difficult to verify all of the motions. Especially, when the robot 11 performs tasks including bringing things into contact with each other as shown in FIG. 3, it is impossible to test all possible situations in advance. Considering this, when the learning model 31 outputs a motion that is not recorded as verified, the motion data recorder 24 forcibly changes the output from the learning model 31 to change the motion to a similar motion that is recorded as verified, for example. As described above, in the robot operation system 100 of the present embodiment, the motion data recorder 24 substantially functions as a model output controller and performs control on the output from the learning model 31 interferingly. Accordingly, an unexpected motion of the robot 11 can be prevented.

It is possible that the additional learning of the learning model 31 becomes required during the operational phase. In this case, the user operates the operating apparatus 12 to add new training data. As a result of clustering performed again, a new node is added to the learning model 31. In FIG. 9, the added node is shown in a dashed line. The added node is recorded as an unverified node in the above-mentioned table. After the operation of additional learning is completed, the phase returns to the operation testing phase or the operational phase. When the verification of the added node is completed similarly as above, the record for this node in the table turns into verified from unverified.

Next, the flow of construing the machine learning model as mentioned above will be described.

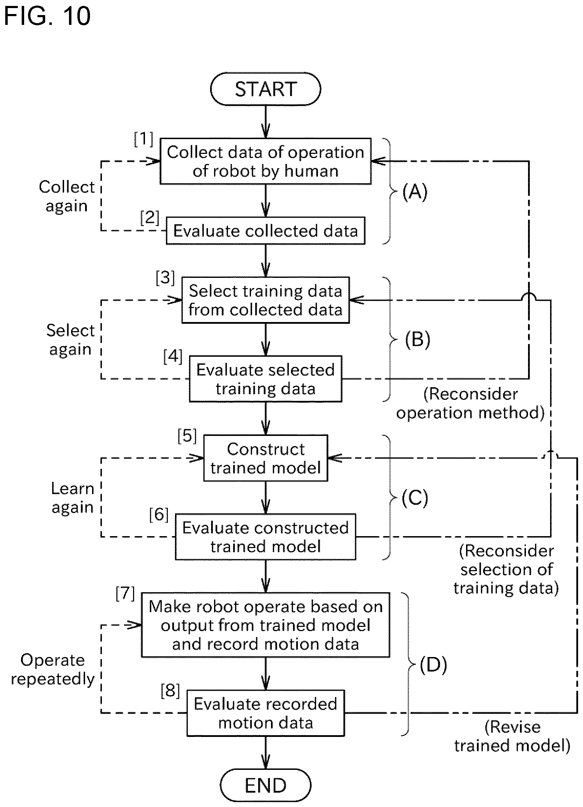

In the present embodiment, as shown in FIG. 10, the workflow from the construction of the learning model 31 to the operation thereof is divided into four phases: (A) obtainment of the collected data, (B) selection of the training data, (C) construction of the trained model, and (D) obtainment of the motion data. In FIG. 10, numbers [1] to [8] indicate a first process to an eighth process. Evaluation is conducted at each phase and if the evaluation criterion is not satisfied, the operation at that phase is performed again, as shown by dashed arrows in FIG. 10. Only when the evaluation criterion is determined to be satisfied can the operation in the next phase be performed.

Therefore, the evaluation at each phase is conducted based on the assumption that the evaluation criterion is satisfied in the operation(s) upstream. Thus, for example, if the trained model constructed at phase (C) does not satisfy the evaluation criterion, it basically can be assumed that there is no problem with the upstream operation and a problem exists in the operation of constructing the trained model.

When there is a problem with the autonomous motion of the machine based on the machine learning model, it is often extremely difficult to specify the reason: whether a problem exists within the training data or the like or within the construction of the trained model. In this respect, in the present embodiment, since the operation is performed while making evaluation at each phase, it is easy to narrow down the cause when a problem is found. Thus, the machine learning model can be smoothly constructed and operated.

Since the operation in each phase is separated from the others, the operations in the four phases can be shared by four persons and the boundaries between the responsibilities of the four persons can be clearly defined, for example.

Of course, for example, when the trained model constructed in the phase (C) does not satisfy the evaluation criterion, it can be turned out that a causative problem exists in the selection of the training data while it has been overlooked during the evaluation on the phase (B). In such a case, as shown by arrows in phantom lines in FIG. 10, the operation and the evaluation in a phase only one previous to the current phase are performed again. This rule prevents major rework and improves operational efficiency.
(1) As described above, in the present embodiment, the trained model is constructed by the method that includes the following six processes. In the first process, the data for performing machine learning of the operation of the robot 11 by the user is collected. In the second process, the collected data that is the data collected is evaluated and, when it does not satisfy the predetermined evaluation criterion, the data is collected again. In the third process, the training data is selected from the collected data that satisfies the evaluation criterion. In the fourth process, the training data is evaluated and, when it does not satisfy the predetermined evaluation criterion, the training data is selected again. In the fifth process, the trained model is constructed by machine learning using the training data that satisfies the evaluation criterion. In the sixth process, the trained model is evaluated and, when it does not satisfy the predetermined evaluation criterion, the trained model is trained again.

In this manner, by proceeding with the operation step by step and conducting the evaluation at each step, a cause of any problems found at each process can be easily narrowed down. Thus, the trained model 31 can be constructed smoothly.

(2) In the present embodiment, in the fourth process, when the training data does not satisfy the evaluation criterion and a problem exists within the collected data, the process returns to the first process. In the sixth process, when the trained model does not satisfy the evaluation criterion and a problem exists within the training data, the process returns to the third process. However, the process may return to the second process instead of the first process and the process may return to the fourth process instead of the third process. This feature can be combined with at least the feature described in the above section (1).

When it is found that there is a problem within the operation performed in the previous phase, the problem can be suitably resolved by starting the operation in that phase over again.

(3) In the present embodiment, in the first process, when the user operates the robot 11, the information including that operation is collected as the data. In the second process, whether the collected data is appropriate as the training data is determined based on a predetermined rule and the results of the determination is presented to the user. This feature can be combined with at least the feature described in the above section (5). This feature can be combined with at least the feature described in the above section (1) or (2).

Accordingly, the user can easily understand whether the collected data is appropriate as the training data or not. Also, the process can be simplified.

(4) In the present embodiment, when the learning model 31 constructed in the fifth process operates in the inference phase, the training data that is used for constructing the learning model 31 and is the basis of the output from the learning model 31 is specified and outputted. This feature can be combined with at least the feature described in any one of the above sections (1) to (3).

Accordingly, when the user wants to edit the results of learning by the learning model 31 partly, for example, the user can grasp the range of the effect of the edit to a certain extent. Therefore, the user can adequately change or delete a part of what the learning model 31 learns.

(5) In the present embodiment, in a seventh process, the robot 11 is operated based on the output from the learning model 31 that satisfies the evaluation criterion to record the motion data. In an eighth process, the motion data is evaluated and, when it does not satisfy a predetermined evaluation criterion, the robot 11 is operated again and the motion data is recorded again. This feature can be combined with at least the feature described in any one of the above sections (1) to (4).

By conducting the evaluation at each step of the operations until the robot 11 is actually operated, a cause of any problems found at each process can be easily narrowed down.

(6) In the present embodiment, in the eighth process, when the motion data does not satisfy the evaluation criterion and a problem exists within the learning model 31, the process returns to the fifth process. However, the process may return to the sixth process instead of the fifth process. This feature can be combined with at least the feature described in the above section (5).

When it is found that there is a problem within the operation performed in the previous phase, the problem can be suitably resolved by starting the operation in that phase over again.

(7) In the present embodiment, the learning model 31 includes more than one training element. If the learning model 31 is constructed by clustering, for example, the node that is the data representing the cluster corresponds to the training element. When the motion of the robot 11 based on the output from the trained model is verified in the seventh process, the training element that is the basis for the motion is recorded as verified. During the actual operation of the trained model, the output from the trained model based on the training element that is unverified is changeable into a predetermined output or into the output based on the verified similar training element. This feature can be combined with at least the feature described in the above section (5) or (6).

Accordingly, the unexpected motion of the robot 11 due to the unverified training element can be prevented.

(8) In the present embodiment, the target to be made perform the autonomous operation by the learning model 31 is the robot 11. This feature can be combined with at least the feature described in any one of the above sections (1) to (7).

Accordingly, the learning model 31 for the autonomous operation of the robot 11 can be constructed smoothly.

While the preferred embodiment of the present disclosure has been described above, the configurations explained above may be modified, for example, as follows. Such a modification may be made singularly or made in combination with any other modification.

The seventh process and the eighth process in FIG. 10 may be omitted and the learning model 31 may be used immediately after the construction for the actual operation.

The evaluation on the collected data shown in the second process may be conducted in a machine-learning-based manner instead of the so-called rule-based manner.

In the second, fourth, sixth and eighth processes, the evaluation may be performed by a computer or by a human.

The output apparatus used by the management apparatus 20 for various displays may be, for example, a liquid crystal display. A projector, a head-mounted display, or the like may also be used. If a head-mounted display is used, for example, the display may be performed using a known augmented reality (AR).

The operation information that the trained model infers may be, for example, the amount of changes in a velocity of the operation performed by the user on the operating apparatus 12 or in a position at which the user operates the operating apparatus 12, instead of the user operation force. Instead of the relation between the state information and the operation information, the trained model may infer the relation between the state information and the control signal send to the robot 11.

The constructed learning model 31 may be adopted with respect to a controlled machine other than the robot 11.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the present disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

## Claims

1. A construction method of a trained model, comprising:
a first process of collecting data for performing machine learning of an operation of a controlled machine by a human;
a second process of evaluating collected data that is the data collected and, when it does not satisfy a predetermined evaluation criterion, collecting the data again;
a third process of selecting training data from the collected data that satisfies the evaluation criterion;
a fourth process of evaluating the training data and, when it does not satisfy a predetermined evaluation criterion, selecting the training data again;
a fifth process of constructing the trained model by machine learning using the training data that satisfies the evaluation criterion; and
a sixth process of evaluating the trained model and, when it does not satisfy a predetermined evaluation criterion, training the trained model again.

2. The construction method of the trained model according to claim 1, wherein, in the fourth process, when the training data does not satisfy the evaluation criterion and a problem exists within the collected data, a process returns to the first process or the second process, and
wherein, in the sixth process, when the trained model does not satisfy the evaluation criterion and a problem exists within the training data, the process returns to the third process or the fourth process.

3. The construction method of the trained model according to claim 1, wherein, in the first process, when a user operates the controlled machine, information including that operation is collected as the data, and
wherein, in the second process, whether the collected data is appropriate as the training data is determined based on a predetermined rule and a result of determination is presented to the user.

4. The construction method of the trained model according to claim 1, wherein, when the trained model constructed in the fifth process operates in an inference phase, the training data that is used for constructing the trained model and is a basis of an output from the trained model is specified and outputted.

5. The construction method of the trained model according to claim 1, comprising:
a seventh process of operating the controlled machine based on an output from the trained model that satisfies the evaluation criterion and recording motion data; and
an eighth process of evaluating the motion data and, when it does not satisfy a predetermined evaluation criterion, operating the controlled machine again and recording the motion data again.

6. The construction method of the trained model according to claim 5, wherein, in the eighth process, when the motion data does not satisfy the evaluation criterion and a problem exists within the trained model, a process returns to the fifth process or the sixth process.

7. The construction method of the trained model according to claim 5, wherein the trained model includes more than one training element, and
wherein, in the seventh process, when a motion of the controlled machine based on the output from the trained model is verified, the training element that is a basis for the motion is recorded as verified, and
wherein, during an actual operation of the trained model, the output from the trained model based on the training element that is unverified is changeable into a predetermined output or into the output based on the verified similar training element.

8. The construction method of the trained model according to claim 1, wherein the controlled machine is a robot.
